Europäisches Patentamt

European Patent Office

Office européen des brevets

(19)

(11) Veröffentlichungsnummer : **0 049 343**
**B2**

(12) **NEUE EUROPÄISCHE PATENTSCHRIFT**

(45) Veröffentlichungstag der neuen Patentschrift :
20.09.89

(51) Int. Cl.⁴ : **B 01 J 20/34**, B 01 J  8/16,
C 01 B 31/08

(21) Anmeldenummer : 81106253.8

(22) Anmeldetag : 11.08.81

(54) Verfahren zur Desorption von beladenem festen Adsorbens-material.

(30) Priorität : 02.10.80 DE 3037187

(43) Veröffentlichungstag der Anmeldung :
14.04.82 Patentblatt 82/15

(45) Bekanntmachung des Hinweises auf die Patenterteilung : 08.02.84 Patentblatt 84/06

(45) Bekanntmachung des Hinweises auf die Entscheidung
über den Einspruch : 20.09.89 Patentblatt 89/38

(84) Benannte Vertragsstaaten :
BE DE FR GB IT NL

(56) Entgegenhaltungen :
DE--A-- 2 551 434
DE--B-- 1 604 835
DE--B-- 1 719 554
DE--B-- 1 926 291
US--A-- 2 905 595
US--A-- 3 449 211
US--A-- 4 201 695
Druckschrift "Schwingmischer" des Patentinhaber
UHDE (1972)

(73) Patentinhaber : Uhde GmbH
Friedrich-Uhde-Strasse 15 Postfach 262
D-4600 Dortmund 1 (DE)

Bergwerksverband GmbH
Versuchsbetrieb der Bergbau-Forschung Franz-Fis-
cher-Weg 61
D-4300 Essen - Kray (DE)

(72) Erfinder : Koch, Manfred
Poststrasse 57
D-4755 Holzwickede (DE)
Erfinder : Mühlhaus, Ludwig, Dr. Dipl.-Ing.
Nothweg 92
D-5860 Iserlohn (DE)
Erfinder : Lambach, Rolf
Osthausstrasse 69
D-5800 Hagen (DE)
Erfinder : Grochowski, Horst, Dr.
Hafenstrasse 25
D-4200 Oberhausen (DE)

EP 0 049 343 B2

Jouve, 18, rue St-Denis, 75001 Paris, France

## Beschreibung

Die Erfindung betrifft ein Verfahren zur Desorption von beladenem festen Adsorbensmaterial durch Aufheizen auf Desorptionstemperatur mittels eines heißen körnigen Wärmeträgers, insbesondere von Aktivkohle oder Aktivkoks, wie er bei der Rauchgasreinigung von Kraftwerksanlagen durch Adsorption verwendet wird, und eine Vorrichtung zur Durchführung des Verfahrens.

Es ist bekannt, die Regeneration von beladener Aktivkohle oder Aktivkoks auf thermischem Wege vorzunehmen. Dabei wird z. B. der Aktivkoks mit einem feinkörnigen, auf Temperaturen von oberhalb 500 °C erhitzten Wärmeträger in Kontakt gebracht, gemäß DE-B 1 719 554. Der beladene Aktivkoks und der heiße Sand werden dem Desorber getrennt zugeführt. Im Desorber befinden sich Einbauden, die für eine gute Vermischung von beiden Stoffströmen sorgen. Dabei wird die Tatsache ausgenutzt, daß bei der Desorption Gas freigesetzt wird, welches in der Mischzone dazu beiträgt, daß ein autogenes Wirbelbett entsteht. Die angeführten Einbauten sind feststehend, also nicht beweglich. Daraus geht hervor, daß eine optimale Vermischung und Ausnutzung des Wärmeträgers nur im Auslegungsfall möglich ist.

Bei Teillast — bezogen auf die stündliche durchgesetzte Aktivkoksmenge — kann es zu einer ungleichmäßigen Verteilung des Aktivkoks mit heißem Sand kommen. Daher wird bei Teillastbetrieb im allgemeinen mehr Sand im Umlauf gefahren, als vom Prozeß her erforderlich ist.

Weitere bekannte Maßnahmen wie der Einbau von Wehren unterhalb der konzentrischen Einlaufrohre nach DE-A-25 39 266 mindern den Entmischungseffekt nur geringfügig und sind im Teillastbetrieb nicht voll wirksam bzw. erfordern einen erhöhten Sandumlauf. In ihrer Abwärtsströmung werden die Aktivkohleteilchen durch sie umhüllenden Sand mehr und mehr aufgeheizt aber auch gleichzeitig dichter vom Sand umschlossen, da mit zunehmender Tiefe das Schüttgewicht über den Teilchen zunimmt. Jalousieartig angeordnete Leitbleche am Umfang der Füllung schaffen zusätzlichen Gassammelraum, erfordern aber gleichzeitig eine Vergrößerung des Desorbers.

Nach BE-B 19 26 291 ist eine Vorrichtung zum Mischen von körnigem bis pulverförmigem Schüttgut bekannt, die aus einem länglichen, gegen die Horizontale in Längsrichtung geneigten, rinnenförmigen Gutträger besteht, dessen unterer Teil einen etwa halbkreisförmigen Querschnitt aufweist, wobei der Gutträger schwingungsfähig gelagert und mit einem Schwingantrieb versehen ist. Eine Aufheizung von beladenem festen Adsorbensmaterial mittels eines heißen körnigen Wärmetauschermaterials, seine Desorption, Abfuhr des Desorptionsproduktes und die anschließende Trennung der beiden Materialien mittels der bekannten Vorrichtung ist nicht durchführbar.

Der Erfindung liegt die Aufgabe zugrunde, das Verfahren nach dem Oberbegriff der Patentanmeldung insoweit zu verbessern, daß es einfacher, mit geringerem apparativen Aufwand und wirkungsvoller ausgeführt werden kann.

Diese Aufgabe wird gelöst durch ein Verfahren mit den Merkmalen von Anspruch 1.

Die Erfindung nutzt die günstigen Wirkungen einer spiralförmigen Umwälzströmung Schaffung einer vorteilhaften wirkungsvollen Wärmeübertragung und Desorption aus.

Da durch die hervorragende Vermischung eine schnelle und gleichmäßige Wärmeübertragung vom Sand auf den Aktivkoks erfolgt, kommt es zu einer schnellen und innerhalb kurzer Zeit vollständigen Desorption. Es besteht daher die Möglichkeit, den gesamten Desorptionsprozeß — Mischung, Vorentgasung, Hauptentgasung und Nachentgasung — innerhalb der Gemischströmung durchzuführen, da die für die Nachentgasung erforderliche Aufenthaltszeit stark herabgesetzt ist.

Darüber hinaus wurde gefunden, daß die im Verhältnis zur Aktivkoksmenge notwendige Sandmenge kleiner sein kann, was zu einer weiteren Einsparung an Energie und Apparatevolumen führt.

Die Merkmale der Erfindung und deren weitere technischen Vorteile ergeben sich auch aus der nachfolgenden Beschreibung eines Ausführungsbeispieles in Verbindung mit den Zeichnungen.

Es zeigen :

Figur 1 eine Vorrichtung zur Durchführung des Verfahrens in der Seitenansicht,

Figur 2 die Strömungsform des Sand-, Aktivkoks-Gemisches im Querschnitt.

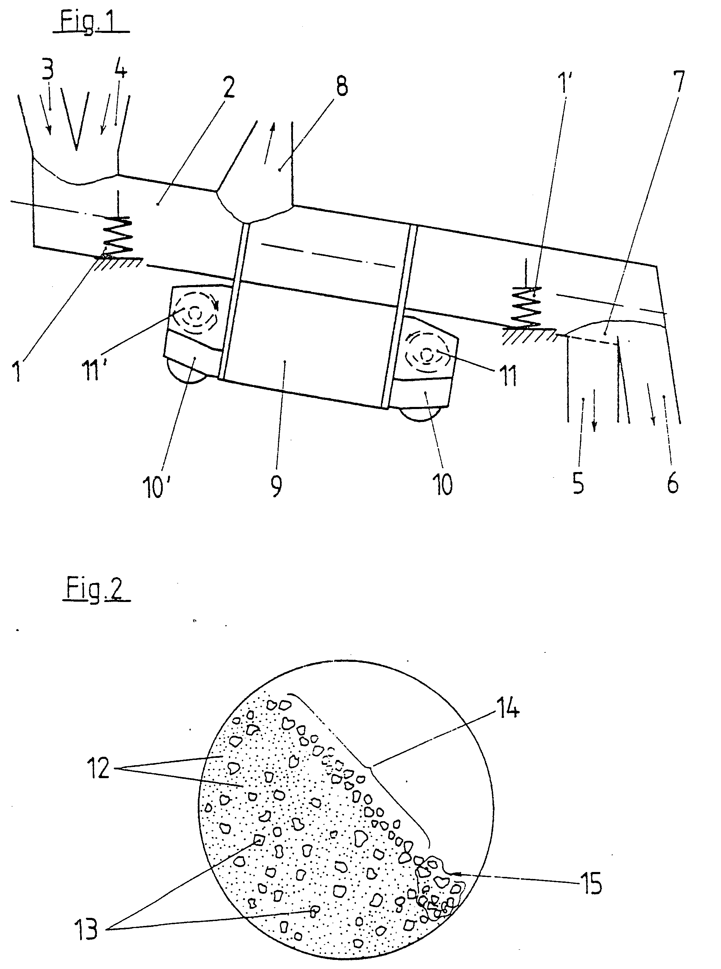

Nach Fig. 1 und 2 wird der beladene Aktivkoks und der heiße Sand zusammengeführt und bereits an der Mischstelle in die Strömungsform, wie in Fig. 1 dargestellt, überführt.

Bei einem in vier Schwingelementen 1 und 1' schwingungsfähig gelagerten, vorzugsweise als Rohrkörper ausgebildeten Gutträger 2 ist mit 3 der Sandeinlauf und mit 4 der Aktivkokseinlauf bezeichnet. Am unteren Teil des Rohrkörpers tritt der Sand durch den Sandauslauf 5 und der desorbierte Aktivkoks durch den Auslauf 6 aus. Das Sieb 7 bewirkt die Trennung des Sandes vom Aktivkoks. Das durch die Desorption freigewordene SO$_2$-Reichgas tritt durch den Abgasstutzen 8 aus und wird abgeleitet. Auf einer am Gutträger 2 befestigten starren Sattelkonstruktion 9 sind zwei Unwuchtantriebe 10 und 10' mit in Pfeilrichtung gegenläufig umlaufenden Unwuchten 11 und 11' angeordnet.

Bei einer derartigen Anordnung stellt sich selbsttätig ein synchroner Umlauf der beiden Unwuchten 11 und 11' ein, derart, daß als Summe der beiden Fliehkräfte eine lineare Schwingungskraft erzeugt wird, die senkrecht steht auf der Verbindungslinie der beiden Motorachsen in der Ebene der Fliehkräfte.

Die Sattelkonstruktion 9 ist so am Gutträger 2 befestigt, daß die Richtung der die Schwingung erzeugenden resultierenden Kraft senkrecht zur Rohrlängsachse und geneigt gegenüber der Vertikalebene durch die Gutträgerlängsachse verläuft. Der Kraftangriff erfolgt im Schwerpunkt des Gesamtsystems, so daß dieses Translationsschwingungen ausführt, deren Richtung gleich der Richtung der erzeugenden resultierenden Kraft ist. Eingegebene Stoffkomponenten führen unter dem Einfluß der auftretenden Beschleunigungskräfte in Schwingrichtung eine Mikrowurfbewegung aus, die ein Aufwärtswandern der einzelnen Sand- und Aktivkoksteilchen an der rohrförmigen innenwand des Gutträgers 2 bewirken. Von unten weiter nachschiebende Teilchen verursachen schließlich, daß die oberen Teilchen auf der Gutschicht zurückgleiten, wodurch eine ständige zwangsläufige Umwälzbewegung entsteht. Die intensive Durchmischung mehrerer Stoffkomponenten wird darüber hinaus dadurch erreicht, daß die eingeleiteten Kräfte unmittelbar auf die einzelnen Gutteilchen wirken, die infolge Reibung und Verzahnung untereinander sowie meist unterschiedlicher Massenträgheit außer der Wälzbewegung eine zusätzliche Relativ-Mischbewegung ausführen. So kommt es überrachenderweise an der schrägen Oberfläche des Mischgutstromes im Gutträger zum Aufschwimmen des spezifisch leichteren Aktivkokses 13 auf dem spezifisch schwereren Sand 12. Die kurzzeitig frei sich bewegenden Koksteilchen 13 können gut ausgasen. Die auf der Mischgutoberfläche 14 heruntergleitenden Aktivkoksteilchen werden an der Unterziehstelle 15 wieder in den Sand eingezogen, aufgeheizt und in die kreisähnliche Bahn geführt. Die vielfache Mischung der Aktivkoksteilchen mit dem Sand, ihre Aufheizung, Entgasung, Entmischung und abermalige Mischung bewirken eine überraschend kurze erforderliche Wegstrecke und damit Desorptionszeit für den beladenen Aktivkoks.

Durch die geneigte Anordnung der Rohrlängsachse wird schließlich eine zum Sandauslauf 5 und Koksauslauf 6 spiralähnliche Umwälzbewegung erzielt, die einen kontinuierlichen Durchsatz gewährleistet.

**Patentansprüche**

1. Verfahren zur Desorption von beladenem festen Adsorbensmaterial durch Aufheizen auf Desorptionstemperatur mittels eines heißen körnigen Wärmeträgers, dadurch gekennzeichnet, daß das kalte beladene, feste Adsorbensmaterial und der heiße Wärmeträger zusammengeführt werden und das sich bildende Gemisch unmittelbar in eine spiralähnliche Umwälzung mit horizontaler oder gegenüber der Horizontalen geneigten Spiralachse gebracht wird, wobei die Umwälz-Wegstrecke je Teilchen je Zeiteinheit ein Vielfaches der Wegstrecke in Richtung der Spiralachse ist und daß das Umwälzen mit Hilfe einer auf das Gemisch einwirkenden linearen Schwingungskraft erfolgt.

2. Vorrichtung zur Durchführung des Verfahrens nach Anspruch 1, bestehend aus einem länglichen gegen die Horizontale in Längsrichtung geneigten, rohrförmigen Gutträger, dessen unterer Teil einen etwa halbkreisförmigen Querschnitt aufweist, wobei der Gutträger schwingungsfähig gelagert und mit einem eine lineare Schwingung erzeugenden Schwingantrieb versehen ist, und wobei die Richtung der die Schwingung erzeugenden resultierenden Kraft durch den Schwerpunkt des Gesamtsystems, senkrecht zur Gutträgerlängsachse und geneigt gegenüber der Vertikalebene durch die Gutträgerlängsachse verläuft, gekennzeichnet durch einen Wärmeträgereinlauf (3), einen Adsorbensmaterialeinlauf (4) am Gutträgerkopf und einen Abgasstutzen (8) im oberen Teil des Gutträgers.

3. Vorrichtung nach Anspruch 2, dadurch gekennzeichnet, daß die Neigung des Gutträgers in bezug auf die Horizontale einstellbar ist.

**Claims**

1. Process for the desorption of spent solid adsorbent heated to desorption temperature by means of a hot granular heating agent, characterized in that cold spent solid adsorbent and the hot heating agent are mixed, the mixture being subjected immediately to a spiral flow having a horizontal axis or moving in an inclined plane and the spiral route per unit of time of each particle being the multiple of the route towards the spiral axis and that the spiral flow is achieved with the aid of a linear vibrating force acting upon the mixture.

2. Device for implementing the process according to claim 1 and consisting of an elongated tubular material conveyor inclined longitudinally towards the horizontal plane, the lower part having an almost semi-circular cross section and the carrier being supported by vibratory elements and equipped with a drive for producing a linear vibration, the direction of the resulting forces generated by said drive passing through the centre of gravity of the whole system, i. e. perpendicularly to the longitudinal axis of the material conveyor and in an inclined plane as seen from the vertical plane of the material conveyor, characterized in that said device has heating agent inlet (3), adsorbent inlet (4) at the upper end and waste gas outlet (8) in the upper section of said material conveyor.

3. Device according to claim 2 in which the inclination of the material carrier is adjustable with reference to the horizontal plane.

**Revendications**

1. Procédé pour la désorption d'un adsorbant solide usé par réchauffement de ce dernier moyennant un caloporteur granuleux chaud, caractérisé en ce que l'adsorbant solide usé froid est mélangé avec le caloporteur chaud, que le mélange obtenu est immédiatement assujetti à un mouvement rotatoire en direction horizontale ou bien inclinée par rapport à l'horizontale, le parcours par unité de temps de chaque particule étant un multiple du tronçon couvert vers l'axe du flux rotatoire et qu'une force vibratoire linéaire agit sur le mélange.

2. Dispositif pour la réalisation du procédé selon la revendication 1, étant entendu que ce dispositif consiste en un transporteur tubulaire qui est élongé et incliné en direction longitudinale par rapport au plan horizontal, sa partie inférieure ayant une section transversale quasi semi-circulaire, que le transporteur est supporté élastiquement et qu'il est équipé d'un moteur produisant une vibration linéaire, la direction de la force résultante passant par le centre de gravité du système total, c.-à-d. perpendiculairement à l'axe longitudinal du transporteur et en pente par rapport au plan vertical, caractérisé en ce que ledit transporteur est doté d'une entrée (3) pour le caloporteur, d'une entrée (4) pour l'adsorbant à l'extrémité supérieure et d'une sortie (8) pour le gaz de sortie dans la partie supérieure dudit transporteur.

3. Dispositif selon la revendication 2, caractérisé en ce que l'inclinaison du transporteur par rapport au plan horizontal est réglable.

Fig.1

Fig.2